# EUROPEAN PATENT SPECIFICATION

(11) **EP 4 028 180 B1**
(45) Date of publication and mention of the grant of the patent: **06.11.2024**
(21) Application number: 20781617.4
(22) Date of filing: 08.09.2020
(51) Int. Cl.: B08B 3/02

(54) **MACHINE FOR WASHING CAGES AND ACCESSORIES USED IN THE FIELD OF RESEARCH ON LABORATORY ANIMALS**
WASCHMASCHINE FÜR KÄFIGE UND ZUBEHÖRTEILE IM BEREICH DER FORSCHUNG MIT LABORTIEREN
MACHINE POUR LAVER DES CAGES ET DES ACCESSOIRES UTILISÉS DANS LE DOMAINE DE LA RECHERCHE SUR DES ANIMAUX DE LABORATOIRE

(30) Priority: 09.09.2019 IT 201900015929
(43) Date of publication of application: 20.07.2022
(73) Proprietor: A.CO S.r.l., 28040 Varallo Pombia (NO) (IT)
(72) Inventor: CONELLI, Carlo Alberto, 28040 Varallo Pombia (NO) (IT)
(74) Representative: Luppi, Emanuele
(86) International application number: PCT/IB2020/058323
(87) International publication number: WO 2021/048729

(56) References cited:
- EP-A1- 2 366 465
- EP-A1- 2 932 879
- EP-A1- 3 248 697
- DE-A1- 3 642 568
- US-A- 3 884 263
- US-A1- 2001 027 800
- US-A1- 2013 146 099

## Description

### Technical Field

The present invention relates to a machine for washing cages and accessories used in the field of research on laboratory animals.

### Background Art

The machines for washing cages can substantially be divided into different categories depending on: load capacity, continuous flow ("closed circuit") or discontinuous flow ("batch") operation and/or on type of washing (e.g. rotating or oscillating rods).

The machine according to the invention falls into the category of discontinuous flow machines with oscillating rods, of small/medium size.

The washing of cages and accessories is usually carried out through booths (so-called "cage washers") provided with double or single door with one or more loading levels and washing systems with rotating and/or oscillating rods below which a recycling tank is positioned in order to collect the washing liquids and eventually reuse them within the same or a subsequent washing cycle. The washing liquids are mixtures usually made up of water with the addition of acid or basic type detergent substances depending on the type of washing to perform. The Applicant has ascertained that the use of a single recycling basin does not allow a perfect chemical balance of the washing liquid to be obtained unless the percentage of acid/basic value of the liquid continues to be increased or reduced by adding from time to time new quantities of acid or basic substances taken from suitable external tanks, or by adding rinsing water. In fact, in case of washing cages whose dirt is acidic in percentage, it is necessary to use a mostly basic substance to counteract the acidity, e.g. by topping up from appropriate external tanks.

The complete reuse of the washing liquid is therefore not possible unless quantities of acid and/or basic substances are added from the outside in order to bring the liquid to the desired pH values with a consequent increase in detergent consumption which translates into high washing costs. The problem of known machines consists therefore in the fact that with a single recycling basin it is not possible to collect all the washing liquid depending on the percentage of acid/basic value present in the cage-washing booth.

A special type of dishmachine is disclosed in the patent document US2013/146099A1. A machine for washing cages and accessories according to the preamble of claim 1 is disclosed in the patent document US2001/027800A1.

### Description of the Invention

The Applicant has thus thought to devise a solution that allows deflecting the flow of the washing liquid circulating in the booth depending on its acid/basic value towards different collecting tanks. This way, it is possible to deflect the washing liquid from time to time depending on the acid or basic contents thereof in order to obtain an extremely effective, yet at the same time cheap, washing system.

The present invention therefore relates to a machine for washing cages according to claim 1 and having structural and functional characteristics such as to meet the aforementioned requirements and at the same time to overcome the drawbacks mentioned above with reference to the prior art.

### Brief Description of the Drawings

Other characteristics and advantages of the present invention will be more evident from the description of a preferred, but not exclusive, embodiment of a machine for washing cages and accessories used in the field of research on laboratory animals, illustrated by way of an indicative, yet non-limiting example, in the attached tables of drawings in which:

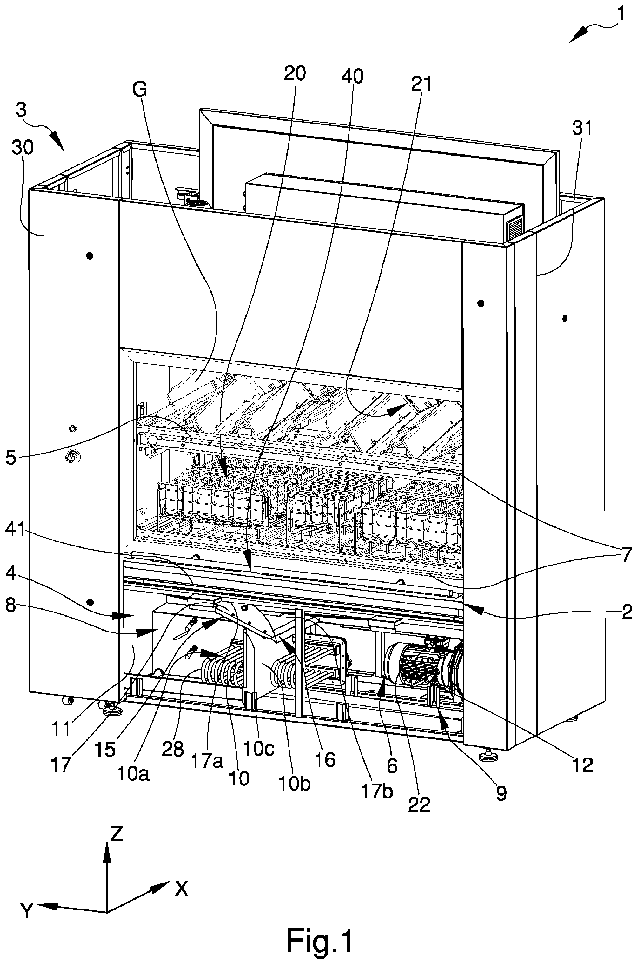

- Figure 1 is a front perspective view of the washing machine according to the invention;
- Figure 2 is a horizontal sectional perspective view of the machine in Figure 1;
- Figure 3 is a vertical sectional perspective view of the machine in Figure 1;
- Figures 4 and 5 are perspective views of the machine in Figure 1 with part of the washing liquid pumping pipes visible in detail;
- Figure 6 is a perspective rear view of the machine in Figure 4.

### Embodiments of the Invention

With particular reference to these figures, reference numeral 1 globally indicates a machine for washing cages.

In the following description and in the subsequent claims, the terms "front", "rear", "upper", "lower", "vertical", "horizontal", "left" or "right" are to be understood with reference to the directions indicated in the drawings, but should not be considered as limiting to specific directions, but used only for descriptive convenience.

The machine 1 comprises a washing booth 2 for washing cages and/or accessories for animals G housed inside a frame structure 3, preferably resting or fixed to the ground, substantially parallelepiped and accessible from the outside by means of one or more doors hinged to the frame structure 3 or, alternatively, sliding with respect thereto.

Preferably, the frame structure 3 has a height between 200 cm and 250 cm, preferably 223 cm, a length between 200 cm and 250 cm, preferably 221.6 cm, and a depth between 50 cm and 150 cm, preferably 92.3 cm.

This way it is possible to ensure the compactness of the machine while maintaining reduced overall dimensions.

The washing machine 1 also comprises a compartment 4 positioned below the washing booth 2 and in fluidic communication with the latter. The washing booth 2 may comprise one or more loading shelves 20,21 arranged horizontally on a plane X-Y and intended to hold the cages and accessories to be washed.

In the embodiment shown in the figures, the two shelves 20,21 are preferably arranged one on top of the other. Conveniently, for each shelf 20,21, one or more rotating or oscillating rods 5 are arranged which receive the washing liquid by means of special pumping means 6 to direct it towards the cages G arranged on the shelves 20, 21. In detail, each rotating rod 5 extends longitudinally along the direction X-X parallel to the relevant shelf 20,21 for the entire length of the washing booth 2 and can be positioned both below and above each shelf 20,21. The rods 5 are preferably provided with nozzles 7 and can be rotated axially by means of actuators (not shown).

Advantageously, the compartment 4 of the machine comprises a framework 40 for the containment of two tanks 8,9 and provided with upper supporting bars 41,42 extended along the longitudinal direction X-X.

It should be noted that the washing liquid is a detergent mixture consisting of water with the addition of substances of the acid or basic type depending on the type of washing to be performed. During washing, the liquid sprayed by the nozzles 7 hits the cages G to remove the dirt and is intended to descend towards the compartment 4 located below the washing booth 2. Since the washing liquid is adapted to intercept dirt generally in order to dissolve it, the acid/basic value of the liquid itself may change, e.g. decrease, depending on the type of dirt being treated. To re-establish therefore the level of acid/basic value used for the current washing, the mixture is usually topped up by adding a predefined amount of acid or basic substance as required.

Usually, the cages G have dirt consisting of both acid and basic contents. Preferably, in order to effectively remove the dirt, the machine 1 carries out a washing cycle with a mainly acid contents washing liquid and then a washing cycle with a mainly basic contents washing liquid.

Conveniently, the washing liquid is collected inside the compartment 4 in order to reuse it, through the pumping means 6, to wash the cages thus creating a closed cycle. For this purpose, advantageously, the compartment 4 of the machine 1 positioned below the booth 2 comprises a first tank 8 and a second tank 9 intended for collecting and selectively recycling the washing liquid depending on the acid/basic value of the liquid itself.

When collecting the liquid, it is thus possible to keep separate the detergent substances used in the various types of washing (mainly acid or mainly basic contents) to prevent the mixtures themselves having different pHs from combining with each other. This way, the division of the liquid into two separate tanks depending on the degree of acid/basic value resulting at the end of a washing cycle allows using less chemical substances to obtain the desired pH at each wash.

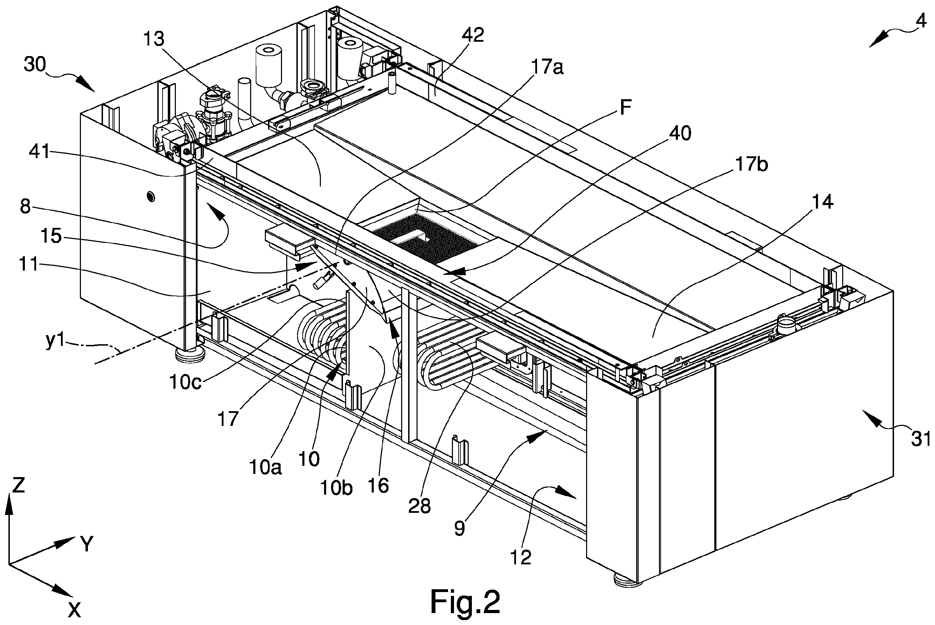

Preferably, the tanks 8,9 have a substantially parallelepiped shape and are arranged adjacent to each other in such a way as to have a common wall 10 defining two surfaces 10a, 10b, each facing inwards of the first tank 8 and of the second tank 9, respectively. With particular reference to the example shown in Figure 2, the common wall 10 is directed vertically and orthogonally to the plane X-Y in a substantially central position of the compartment 4. Conveniently, each of the tanks 8,9 comprises a side wall 11,12 positioned parallel to the common wall 10. Each side wall 11,12 and the common wall 10 are connected by means of a closing wall 13,14 placed substantially horizontally and facing the washing booth 2.

In a preferred embodiment, the closing wall 13,14 of each tank is tilted down from the side wall 11,12 towards the common wall 10 so that the liquid flows towards the common wall 10 of the tanks 8,9. Preferably, on each tank 8,9 there is an upper opening 15,16 for the flow of the liquid from the closing wall 13,14 towards the tanks themselves. Each opening is through and formed in the respective closing wall 13,14 in the proximity of the common wall 10. Preferably, with reference to the first tank 8, the opening 15 is obtained along the entire width, in the transverse direction Y-Y, of the tank 8. Similarly, the opening 16 of the second tank 9 is quite similar to the opening 15 of the first tank 8.

In order to selectively deflect the washing liquid towards the first tank 8 or the second tank 9, deflection means 17 are arranged above the common wall 10 and between the two tanks 8,9. In particular, the deflection means 17 comprise an oscillating plane of substantially rectangular shape. Preferably, the oscillating plane 17 has a width substantially equal to the width of the openings 15,16 and a predefined length to be able to close the openings 15,16 alternately, the operation of which will be described in detail later in this description. Preferably, the oscillating plane 17 is intended to oscillate around its own axis y1, extended parallel to the transverse direction Y-Y, and arranged in a substantially median position with respect to the plane 17 itself.

The oscillating plane 17 is conveniently hinged between the two supporting bars 41,42 preferably halfway between the two, so that the axis yi is positioned above the upper end edge 10c of the wall 10. In one version, the axis yi is positioned at a predetermined distance from the upper edge 10c of the wall 10.

On the oscillating plane 17 it is possible to identify two portions 17a,17b: the first portion 17a is the part of plane 17 arranged at least partly towards the first tank 8 and the second portion 17b is the part of plane 17 arranged at least partly towards the second tank 9.

The plane 17 can conveniently oscillate between a first position and a second position by means of a pneumatic cylinder 18.

In the first position, the plane 17 is intended to tilt so that the first portion 17a closes the opening 15 of the first tank 8 in order to allow the liquid to flow into the second tank 9 and leave the opening 16 free so that the liquid enters the second tank 9.

In the second position, the plane 17 tilts towards the first tank 8 so that the second portion 17b closes the opening 16 of the second tank 9 in order to let the liquid flow into the first tank 8 and thus leave the opening 15 free so that the liquid enters the first tank 8.

With reference to the example shown in Figure 2, the machine 1 can comprise a grid F for filtering the washing liquid before it enters the tanks 8,9 in order to block any undissolved or unwanted materials. In particular, the grid F is arranged along the washing liquid flowing path towards the tanks 8,9 and covers at least partly the openings 15,16 and the plane 17 so that only the liquid filtered by the grid F can enter the tanks 8,9.

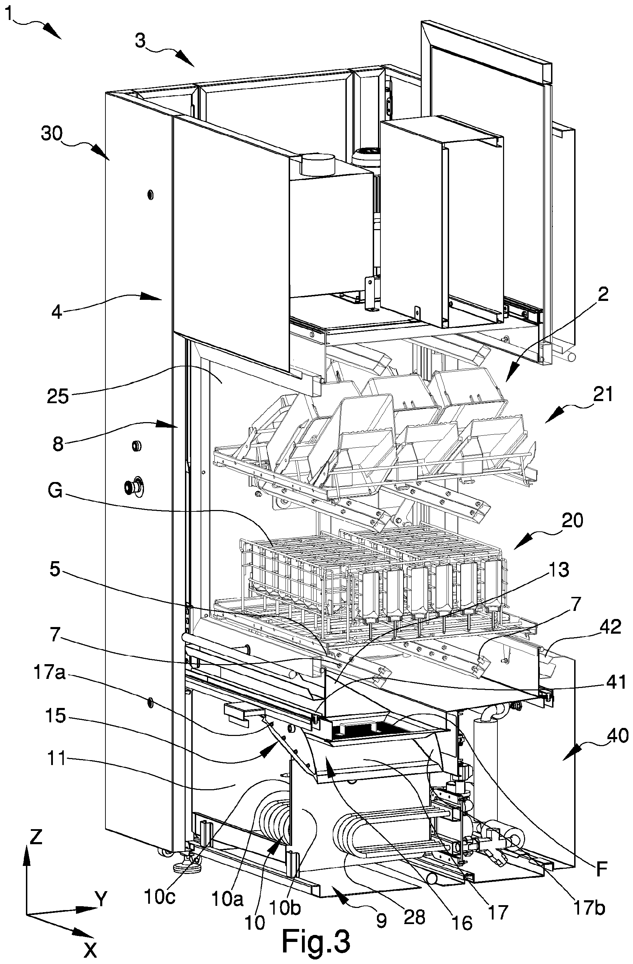

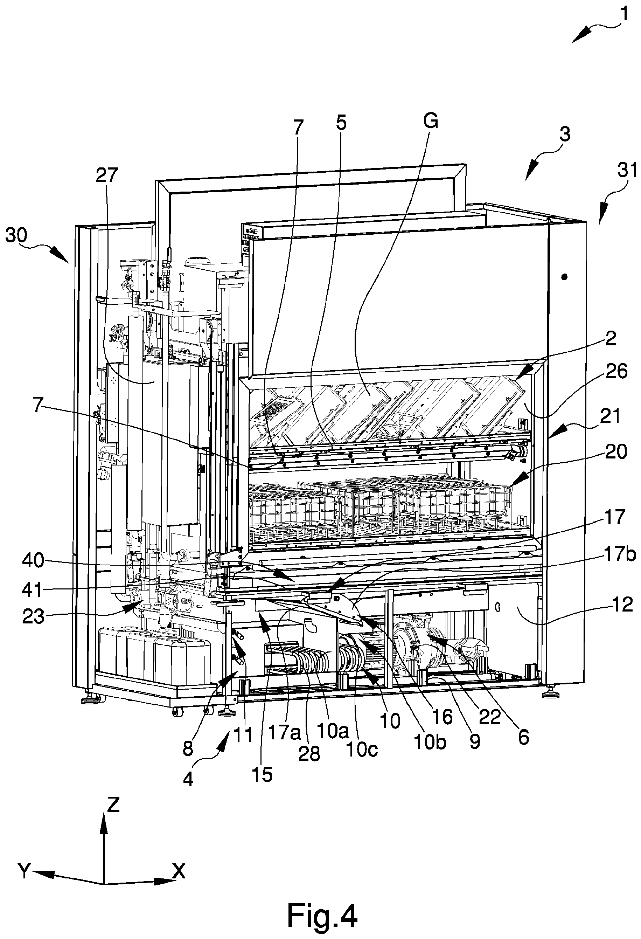

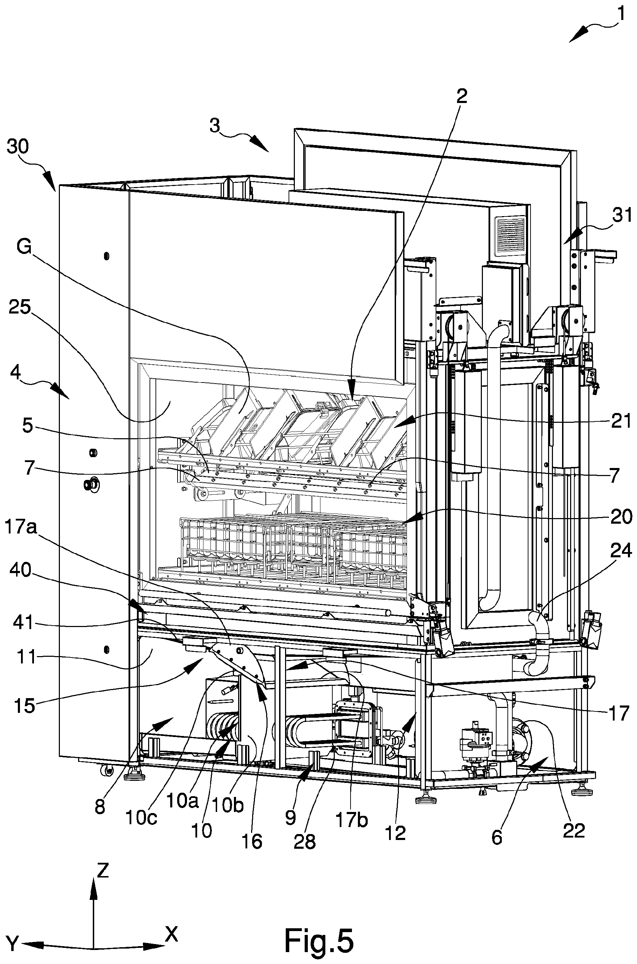

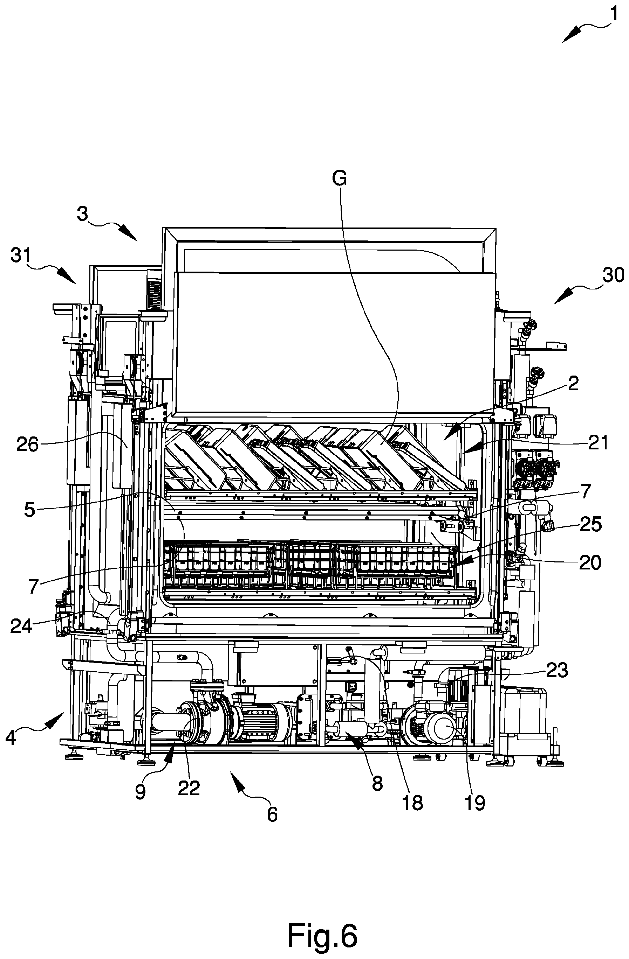

As shown in Figures 3-6, the pumping means 6 comprises a first pump 19 and a second pump 22 connected to the first tank 8 and to the second tank 9 respectively to take the washing liquids contained inside the latter. The liquids taken from the tanks 8,9 by means of the pumps 19,22 are directed through appropriate ducts 23,24 and deflected by the relevant collectors 25,26 to reach the rods 5.

The frame structure 3 of the washing machine 1 also comprises two side compartments 30,31 arranged at the sides of the washing machine 1 for the support of the collectors 25,26. Preferably, the presence of two side compartments 30,31 allows keeping separate the collectors 25,26 connected to the two different pumps 19,22 and thus facilitate the separation of the fluid-operated paths of each mixture coming from the relevant tank 8,9. In detail, the collectors 25,26 extend vertically on both sides of the washing booth 2 and between them the washing rods 5 extend orthogonally. The washing rods 5 are arranged in pairs and each one is connected in a fluid-operated manner to a different collector so that the different liquids do not interact with each other. The machine 1 can usefully comprise an additional tank 27 which contains water for rinsing the cages G and for topping up the tanks 8, 9 to compensate for the evaporation of the washing liquid. In particular, the additional tank 27 is arranged in the side compartment 30 of the frame and is in fluidic communication with the collector 25 supported by the same compartment 30. This way, the collector 25 may direct the water to the rods 5 that, through the nozzles 7, direct the liquid towards the cages G.

The machine 1 also comprises heating coils 28 to heat the liquid in each tank 8,9 and/or the water in the additional tank 27 in order to increase the washing power.

Summing up, as mentioned above, the liquid used for washing is sent separately inside the first tank 8 and/or the second tank 9 depending on the acid or basic contents so that, depending on the type of washing in progress, the pumping means 6 take the liquid from the first tank 8 or the second tank 9 to reuse it during washing. For this purpose, the oscillating plane 17 moves between the first position and the second position by alternatively closing/opening the openings 15,16 of the two tanks 8,9. This way, the liquid falling from the washing booth 2 is directed, by means of the oscillating plane 17, into the tank 8 or 9 from which it has been taken, being able to make a substantially closed circuit for each type of washing, whether acid or basic, thus avoiding to mix the different washing liquids.

In addition, by means of appropriate sensors (not shown), it is possible to know in real time the pH value of the washing liquid. For this purpose, the machine 1 can mix the washing liquid with water and/or chemical products depending on the pH value measured by the sensors and re-establish the level of acid/basic value used for washing thanks to the presence of one or more dosers (not shown) positioned along the inlet path of the recycled liquid from the tanks 8,9. Finally, the movement of the oscillating plane 17 is adapted to further adjust the acid/basic value of the liquid in continuous by taking appropriately from the first tank 8 and/or from the second tank 9 to obtain a mixing of the liquids contained therein to counteract the overall acid/basic value.

As can be checked from the present description, it has been ascertained that the described invention achieves the intended objects and in particular the fact is underlined that through the use of several tanks arranged below the washing booth and the deflections means it is possible to keep the washing liquids separate or to mix them together so that the washing power is highly detergent with reduced costs and contribute to the reduction of waste products highly polluting for the environment.

In addition to this, the special solution of providing deflection means, e.g. consisting of a tilting plane, allows deflecting very simply the falling liquid coming from the washing booth, without the need for valves and pipes, so as to alternatively supply one or the other tank and obtain an extremely effective, yet at the same time cheap, washing system.

## Claims

1. Machine (1) for washing cages and accessories comprising:
a washing booth (2) for washing animal cages (G) by means of a washing liquid,
a first tank (8) and a second tank (9) intended for collecting and recycling the washing liquid according to the acid/basic value of the liquid itself, the tanks (8,9) being in fluidic communication with the washing booth (2), wherein said washing booth (2) comprises at least one oscillating washing rod (5) which receives the washing liquid from the tanks (8,9) to direct it towards the cages (G),
**characterised by** the tanks (8,9) being positioned below the washing booth (2) and by deflection means (17) of the washing liquid positioned between the washing booth (2) and the tanks (8,9) and intended to deflect the washing liquid alternately towards the first tank (8) or the second tank (9).

2. Machine (1) according to claim 1, wherein each tank (8,9) has its own upper opening (15,16) for the flow of the washing liquid.

3. Machine (1) according to any of the preceding claims, wherein the tanks (8,9) are positioned adjacent to each other and have a wall (10) in common.

4. Machine (1) according to claim 3, wherein the deflection means (17) comprise an oscillating plane (17) positioned above the common wall (10) and between the tanks (8,9) in order to close alternately each upper opening (15,16) for the selective flow of the washing liquid towards either the first tank (8) or the second tank (9).

5. Machine (1) according to any of the preceding claims, comprising pumping means (6) intended to take the washing liquid from the tanks (8,9) to reintroduce it into the washing booth (2).

6. Machine (1) according to any of the preceding claims, comprising a first duct (23) and a second duct (24) respectively connected to the first tank (8) and to the second tank (9) and to the pumping means (6) to convey the washing liquid taken from the tanks (8,9) and reintroduce it to the washing booth (2) by means of the washing rod (5).

7. Machine (1) according to any of claims from 4 to 6, wherein the oscillating plane (17) moves between a first position and a second position, wherein in the first position the plane (17) is intended to tilt to close the opening (15) of the first tank (8) and to leave the opening (16) of the second tank (9) free in order to flow the liquid into the second tank (9), and wherein in the second position the plane (17) is intended to tilt in the opposite direction to close the opening (16) of the second tank (9) and to leave the opening (15) of the first tank (8) free in order to flow the liquid into the first tank (8).

8. Machine (1) according to any of the preceding claims, comprising sensor means intended to measure in real time the pH value of the washing liquid in order to regulate the acid/basic value of the washing liquid and to move the deflection means (17) between the first tank (8) and the second tank (9) according to the pH.

## Patentansprüche

1. Maschine (1) zum Waschen von Käfigen und Zubehör, umfassend: eine Waschkabine (2) zum Waschen von Tierkäfigen (G) mittels einer Waschflüssigkeit, einen ersten Tank (8) und einen zweiten Tank (9), die zum Sammeln und Recyceln der Waschflüssigkeit in Abhängigkeit vom Säure-/Basenwert der Flüssigkeit selbst bestimmt sind, wobei die Tanks (8, 9) mit der Waschkabine (2) in Fluidverbindung stehen, wobei die Waschkabine (2) mindestens einen oszillierenden Waschstab (5) umfasst, der die Waschflüssigkeit aus den Tanks (8, 9) aufnimmt, um sie zu den Käfigen (G) zu leiten,
**dadurch gekennzeichnet, dass** die Tanks (8, 9) unterhalb der Waschkabine (2) angeordnet sind und dass Umlenkmittel (17) für die Waschflüssigkeit zwischen der Waschkabine (2) und den Tanks (8, 9) angeordnet sind, und die dazu vorgesehen sind, die Waschflüssigkeit abwechselnd zum ersten Tank (8) oder zum zweiten Tank (9) umzulenken.

2. Maschine (1) nach Anspruch 1, wobei jeder Tank (8, 9) eine eigene obere Öffnung (15, 16) für den Durchfluss der Waschflüssigkeit hat.

3. Maschine (1) nach einem der vorhergehenden Ansprüche, wobei die Tanks (8, 9) nebeneinander angeordnet sind und eine gemeinsame Wand (10) aufweisen.

4. Maschine (1) nach Anspruch 3, wobei die Ablenkmittel (17) eine oszillierende Ebene (17) umfassen, die oberhalb der gemeinsamen Wand (10) und zwischen den Tanks (8, 9) angeordnet ist, um abwechselnd jede obere Öffnung (15, 16) zu schließen für den selektiven Durchfluss der Waschflüssigkeit entweder zu dem ersten Behälter (8) oder zu dem zweiten Behälter (9).

5. Maschine (1) nach einem der vorhergehenden Ansprüche, umfassend Pumpmittel (6), die dazu bestimmt sind, die Waschflüssigkeit aus den Behältern (8, 9) zu entnehmen, um sie wieder in die Waschkabine (2) einzuleiten.

6. Maschine (1) nach einem der vorhergehenden Ansprüche, umfassend eine erste Leitung (23) und eine zweite Leitung (24), die jeweils mit dem ersten Tank (8) und dem zweiten Tank (9) und mit der Pumpeinrichtung (6) verbunden sind, um die den Tanks (8, 9) entnommene Waschflüssigkeit zu fördern und sie mittels der Waschstange (5) in die Waschkabine (2) einzuleiten.

7. Maschine (1) nach einem der Ansprüche 4 bis 6, wobei sich die oszillierende Ebene (17) zwischen einer ersten Position und einer zweiten Position bewegt, wobei die Ebene (17) in der ersten Position dazu bestimmt ist, zu kippen, um die Öffnung (15) des ersten Tanks (8) zu schließen und die Öffnung (16) des zweiten Tanks (9) freizulassen, um die Flüssigkeit in den zweiten Behälter (9) fließen zu lassen, und wobei in der zweiten Position die Ebene (17) in die entgegengesetzte Richtung kippen soll, um die Öffnung (16) des zweiten Behälters (9) zu schließen und die Öffnung (15) des ersten Behälters (8) freizulassen, um die Flüssigkeit in den ersten Behälter (8) fließen zu lassen.

8. Maschine (1) nach einem der vorhergehenden Ansprüche, umfassend SensorMittel, die dazu bestimmt sind, in Echtzeit den pH-Wert der Waschflüssigkeit zu messen, um den Säure/Basen-Wert der Waschflüssigkeit zu regeln und die Ablenkmittel (17) zwischen dem ersten Tank (8) und dem zweiten Tank (9) entsprechend dem pH-Wert zu bewegen.

## Revendications

1. - Machine (1) pour laver des cages et des accessoires comprenant :
une cabine de lavage (2) pour laver des cages d'animaux (G) au moyen d'un liquide de lavage ;
un premier réservoir (8) et un second réservoir (9) destinés à collecter et à recycler le liquide de lavage selon la valeur acide/basique du liquide lui-même, les réservoirs (8,9) étant en communication fluidique avec la cabine de lavage (2),
dans laquelle ladite cabine de lavage (2) comprend au moins une tige de lavage oscillante (5) qui reçoit le liquide de lavage provenant des réservoirs (8,9) pour le diriger vers les cages (G),
**caractérisée par le fait que** les réservoirs (8,9) sont positionnés au-dessous de la cabine de lavage (2) et que des moyens de déviation (17) du liquide de lavage sont positionnés entre la cabine de lavage (2) et les réservoirs (8,9) et destinés à dévier le liquide de lavage alternativement vers le premier réservoir (8) ou le second réservoir (9).

2. - Machine (1) selon la revendication 1, dans laquelle chaque réservoir (8,9) a sa propre ouverture supérieure (15,16) pour l'écoulement du liquide de lavage.

3. - Machine (1) selon l'une quelconque des revendications précédentes, dans laquelle les réservoirs (8,9) sont positionnés l'un à côté de l'autre et ont une paroi (10) en commun.

4. - Machine (1) selon la revendication 3, dans laquelle les moyens de déviation (17) comprennent un plan oscillant (17) positionné au-dessus de la paroi commune (10) et entre les réservoirs (8,9) afin de fermer alternativement chaque ouverture supérieure (15,16) pour l'écoulement sélectif du liquide de lavage soit vers le premier réservoir (8) soit vers le second réservoir (9).

5. - Machine (1) selon l'une quelconque des revendications précédentes, comprenant des moyens de pompage (6) destinés à prélever le liquide de lavage à partir des réservoirs (8,9) pour le réintroduire dans la cabine de lavage (2).

6. - Machine (1) selon l'une quelconque des revendications précédentes, comprenant un premier conduit (23) et un second conduit (24) reliés respectivement au premier réservoir (8) et au second réservoir (9) et aux moyens de pompage (6) pour acheminer le liquide de lavage prélevé à partir des réservoirs (8,9) et le réintroduire dans la cabine de lavage (2) au moyen de la tige de lavage (5) .

7. - Machine (1) selon l'une quelconque des revendications de 4 à 6, dans laquelle le plan oscillant (17) se déplace entre une première position et une seconde position, dans laquelle, dans la première position, le plan (17) est destiné à basculer pour fermer l'ouverture (15) du premier réservoir (8) et à laisser l'ouverture (16) du second réservoir (9) libre afin de faire s'écouler le liquide dans le second réservoir (9), et dans laquelle, dans la seconde position, le plan (17) est destiné à basculer dans la direction opposée pour fermer l'ouverture (16) du second réservoir (9) et à laisser l'ouverture (15) du premier réservoir (8) libre afin de faire s'écouler le liquide dans le premier réservoir (8).

8. - Machine (1) selon l'une quelconque des revendications précédentes, comprenant des moyens de détection destinés à mesurer en temps réel la valeur de pH du liquide de lavage afin de régler la valeur acide/basique du liquide de lavage et de déplacer les moyens de déviation (17) entre le premier réservoir (8) et le second réservoir (9) selon le pH.
